# DEMANDE DE BREVET EUROPEEN

(11) **EP 4 628 391 A1**
(43) Date de publication de la demande: **08.10.2025**
(21) Numéro de dépôt: 25168616.8
(22) Date de dépôt: 04.04.2025
(51) Int. Cl.: B62D 25/02, B62D 65/02

(54) **PROCÉDÉ D ASSEMBLAGE D'UNE CAISSE D'UN VÉHICULE AUTOMOBILE**

(30) Priorité: 05.04.2024 FR 2403547
(71) Demandeur: Renault s.a.s, 92100 Boulogne Billancourt (FR)
(72) Inventeur: PERRIN, Vincent, 78640 Villiers Saint Frédéric (FR)

(57) **Abrégé**

La présente invention concerne un procédé d'assemblage d'une structure d'un véhicule automobile comprenant au moins un cadre (6) configuré pour délimiter une embrasure d'un ouvrant coulissant du véhicule automobile et au moins un rail (12) solidarisé au cadre (6) et configuré pour assurer au moins le guidage de l'ouvrant coulissant, une plaquette de positionnement (26), comprenant une ouverture de positionnement est positionnée contre la première face (28) du cadre (6), le rail (12), comprenant un moyen de fixation (24), est positionné contre une deuxième face (30) du cadre (6), opposée à la première face (28), de sorte que le moyen de fixation (24) s'étende à travers un orifice de passage (22) formé dans le cadre (6) et l'ouverture de positionnement.

## Description

La présente invention concerne le domaine des structures de véhicules automobiles. La présente invention concerne plus particulièrement un procédé d'assemblage de telles structures permettant notamment de positionner précisément des éléments de la structure les uns par rapport aux autres.

Certains véhicules automobiles comprennent un ouvrant coulissant, un tel ouvrant pouvant être agencé sur un seul côté, de chaque côté ou à l'arrière d'une caisse du véhicule.

Ces ouvrants sont configurés pour coulisser selon un premier sens de façon à générer une ouverture de l'ouvrant et selon un deuxième sens de façon à provoquer une fermeture de l'ouvrant. De façon courante, le déplacement de l'ouvrant dans un sens ou dans l'autre est permis par la circulation d'au moins un galet, solidaire de l'ouvrant, dans un rail solidaire de la caisse du véhicule automobile.

Ce rail peut être un rail de guidage, destiné à guider l'ouvrant le long de la caisse du véhicule selon chacun des sens de déplacement, ou un rail porteur, destiné à la fois à supporter le poids de l'ouvrant et à guider l'ouvrant tel que précédemment évoqué. La position des rails par rapport à la structure de caisse, et notamment la position du ou des rails porteurs, est une préoccupation majeure lors de l'assemblage du véhicule dans la mesure où cette position des rails détermine la position de l'ouvrant par rapport à une embrasure délimitée par un cadre de la caisse et que l'ouvrant a pour fonction de recouvrir en position fermée. Or, il est essentiel que la position de l'ouvrant en position fermée soit conforme à la position théorique prévue, puisque l'ouvrant et/ou l'embrasure sont pourvus sur leur pourtour d'un joint d'étanchéité qu'il convient de comprimer de manière adéquate à la fermeture de l'ouvrant pour que la fonction d'étanchéité soit optimale.

Il est notamment connu de monter le rail dans un boîtier de rail, lui-même rapporté sur le cadre de la caisse, notamment pour des questions d'étanchéité et de protection du rail. Les jeux de fabrication et de montage s'additionnent alors et peuvent légèrement décaler la position du rail par rapport à la position théorique souhaitée. Dans ce contexte, il est ainsi classique, au regard de la problématique de positionnement préalablement évoquée, d'avoir des procédés d'assemblage de structure de véhicule automobile dans lequel, une fois le rail monté sur l'élément de structure de caisse associé, la position du rail doit être retouchée en bout de chaîne d'assemblage pour garantir la bonne position du rail une fois équipé de l'ouvrant. Une telle retouche n'est pas satisfaisante en ce qu'elle augmente significativement la charge de l'opérateur et le temps d'assemblage du véhicule.

La présente invention s'inscrit dans ce contexte et se propose de pallier au moins certains des inconvénients de l'art antérieur. La présente invention concerne ainsi un procédé d'assemblage d'une caisse d'un véhicule automobile dans lequel la position du rail est convenablement assurée lors de l'assemblage sans nécessiter d'intervention en fin d'assemblage, et la présente invention concerne les moyens spécifiquement développés pour la mise en œuvre d'un tel procédé d'assemblage.

Ainsi, selon un premier aspect, la présente invention porte sur un procédé d'assemblage d'une structure d'un véhicule automobile comprenant au moins un cadre configuré pour délimiter une embrasure d'un ouvrant coulissant du véhicule automobile et au moins un rail solidarisé au cadre et configuré pour assurer au moins le guidage de l'ouvrant coulissant, le procédé d'assemblage mettant en œuvre au moins :
- une première étape au cours de laquelle un premier pion et un deuxième pion sont solidarisés à une première face du cadre,
- une deuxième étape au cours de laquelle le rail, comprenant un moyen de fixation, est positionné, directement ou indirectement, contre une deuxième face du cadre, opposée à la première face, de sorte que le moyen de fixation s'étende à travers un orifice de passage formé dans le cadre,
- une troisième étape au cours de laquelle une plaquette de positionnement, comprenant un premier trou, un deuxième trou et une ouverture de positionnement, est positionnée contre la première face du cadre de sorte que le premier pion s'étende à travers le premier trou et le deuxième pion s'étende à travers le deuxième trou, l'ouverture de positionnement étant alignée avec l'orifice de passage,
- une quatrième étape au cours de laquelle le moyen de fixation, qui s'étend à travers l'ouverture de positionnement suite à la réalisation des deuxième et troisième étapes, est solidarisé à la plaquette de positionnement.

La structure forme une partie du véhicule automobile participant à délimiter un habitacle dudit véhicule automobile. Elle peut notamment consister en un côté de caisse, lorsque l'ouvrant coulissant est un ouvrant latéral coulissant. Le rail est un élément de structure, rendu solidaire de la structure, plus particulièrement du côté de caisse, participant à permettre le déplacement de l'ouvrant coulissant, plus particulièrement de l'ouvrant latéral coulissant. Il est précisé que le rail est configuré pour assurer au moins le guidage de l'ouvrant coulissant dans la mesure où le rail peut également être un rail porteur, dimensionné et configuré pour supporter le poids de l'ouvrant coulissant.

Le premier pion et le deuxième pion solidarisés au cadre lors de la première étape du procédé d'assemblage sont des éléments formant saillie de la première face du cadre. La première face du cadre est la face orientée en direction de l'habitacle du véhicule automobile.

Lors de la deuxième étape le rail est disposé, directement ou indirectement, contre la deuxième face du cadre et on comprend que la deuxième face du cadre, opposée à la face du cadre sur laquelle sont solidarisés le premier pion et le deuxième pion, est la face orientée vers l'extérieur du véhicule automobile. Il doit être considéré que le rail est disposé indirectement contre la deuxième face du cadre lorsqu'une pièce intermédiaire, par exemple un boîtier de rail qui assure la protection et l'étanchéité du rail, est interposée entre la deuxième face du cadre et le rail. Ce boîtier de rail est plaqué contre la deuxième face du cadre et le rail est plaquée dans le fond du boîtier de rail.

La plaquette de positionnement, spécifiquement mise en œuvre lors de la troisième étape, permet d'assurer la position du rail par rapport à la caisse de façon fiable, ce qui permet par la suite de se passer d'une étape d'ajustement de position. Cette position fiable est assurée par un positionnement spécifique de la plaquette de positionnement par rapport au cadre, via la coopération de la plaquette de positionnement avec le premier pion et le deuxième pion dont la position par rapport à la caisse est préalablement certifiée conforme à une position théorique souhaitée.

Lors de la troisième étape, la plaquette de positionnement est disposée contre la première face de cadre et l'opérateur s'assure lors de cette étape que le premier pion solidaire du cadre se loge dans le premier trou de la plaquette et que simultanément le deuxième pion solidaire du cadre se loge dans le deuxième trou de la plaquette. Le premier trou et le deuxième trou sont des trous débouchant permettant aux pions de passer à travers la plaquette de positionnement.

On comprend qu'à l'issue de la deuxième étape et de la troisième étape, le cadre est disposé entre la plaquette de positionnement et le rail, avec la plaquette et le rail qui sont plaqués contre des faces opposées du cadre. De plus, à l'issue de ces deux étapes, le moyen de fixation solidaire du cadre s'étend à travers l'orifice de passage ménagé dans le cadre et à travers l'ouverture de positionnement de la plaquette de positionnement.

Il convient de noter qu'il n'existe pas de chronologie particulière entre la deuxième étape et la troisième étape. Dans une première alternative, la deuxième étape est réalisée avant la troisième étape, et la plaquette de positionnement est positionnée contre la première face du cadre en s'assurant d'insérer chacun des éléments en saillie de la première face dans la lumière correspondante, à savoir le moyen de fixation dans l'ouverture de positionnement, le premier pion dans le premier trou et le deuxième pion dans le deuxième trou. Dans une deuxième alternative, avec la plaquette de positionnement qui est prépositionnée contre la première face du cadre dans un premier temps, préalablement au positionnement du rail contre la deuxième face, et donc avec la troisième étape qui est réalisée avant la deuxième étape, le moyen de fixation du rail s'étend simultanément à travers l'orifice de passage du cadre et l'ouverture de positionnement de la plaquette de positionnement déjà en place.

Il convient de noter que dans le cas de la deuxième alternative, avec la troisième étape qui est réalisée préalablement à la deuxième étape, une étape supplémentaire peut être mise en œuvre entre la troisième étape et la deuxième étape, au cours de laquelle des moyens de maintien, par exemple des agrafes, sont disposés sur au moins l'un des pions. Ces moyens de maintien permettent à la plaquette de positionnement d'être maintenue solidaire de la première face du cadre lors du positionnement du rail et du passage du moyen de fixation à travers l'ouverture de positionnement.

Selon une caractéristique optionnelle de l'invention, la position du moyen de fixation par rapport à l'orifice de passage est ajustée au moyen de l'ouverture de positionnement de la plaquette de positionnement. L'ajustement de la position du moyen de fixation est assuré par l'ouverture de positionnement de la plaquette de positionnement. En effet, la forme et la dimension, par exemple le diamètre de l'ouverture de positionnement, sont complémentaires de la forme et de la dimension, ici donc le diamètre, du moyen de fixation. Plus particulièrement, le diamètre interne de l'ouverture de positionnement est égal ou légèrement supérieur au diamètre externe du moyen de fixation pour simplement permettre au moyen de fixation de s'étendre à travers l'ouverture de positionnement. Cette complémentarité permet de positionner le moyen de fixation selon la position de la plaquette de positionnement. On comprend que le diamètre de l'ouverture de positionnement est plus petit que le diamètre de l'orifice de passage, puisque ce dernier doit être suffisamment grand pour permettre l'insertion du moyen de fixation sans tâtonnement de la part de l'opérateur. Par ailleurs, on comprend que dans ce contexte d'un moyen de fixation et d'une ouverture de positionnement qui présentent des dimensions complémentaires, il est avantageux pour l'opérateur de réaliser les étapes du procédé d'assemblage avec la troisième étape qui intervient après la deuxième étape.

Selon une caractéristique optionnelle de l'invention, au cours d'une étape antérieure à la première étape, le premier pion et le deuxième pion sont positionnés sur la première face du cadre par rapport à un point de référence d'un élément structurel de base de la structure du véhicule automobile.

Le positionnement du premier pion et du deuxième pion est assuré, c'est-à-dire que la position de ces pions par rapport à la caisse est certifiée conforme à une position théorique souhaitée, par une mesure précise, par exemple une mesure laser, par rapport à l'élément structurel de base. Cet élément structurel de base forme un élément de la structure de caisse du véhicule dont la position est définie précisément avec peu de variations d'une structure à une autre. Un tel référencement est notamment utile lorsque le rail est positionné au sein d'un boîtier de rail, interposé entre la structure de caisse et le rail et qui vient ajouter des tolérances de positionnement lors de l'assemblage du rail par rapport à la structure de caisse.

Selon une caractéristique optionnelle de l'invention, le positionnement du premier pion et du deuxième est réalisé par rapport à un même élément structurel de base de la structure du véhicule automobile. En se référant à un même élément structurel de base, on limite la dispersion entre le premier pion et le deuxième pion.

Selon une caractéristique optionnelle de l'invention, le premier pion et le deuxième pion sont positionnés sur la première face du cadre indépendamment de la position de l'orifice de passage par rapport à l'élément structurel de base.

Selon une caractéristique optionnelle de l'invention, l'élément structurel de base est distinct du cadre.

Selon une caractéristique optionnelle de l'invention, le rail est un rail porteur configuré pour supporter le poids de l'ouvrant coulissant.

Selon un deuxième aspect, la présente invention porte également sur une plaquette de positionnement pour la mise en œuvre du procédé d'assemblage.

Selon une caractéristique optionnelle de l'invention, l'ouverture de positionnement présente une forme et une dimension complémentaires de la forme et de la dimension du moyen de fixation. Plus particulièrement, l'ouverture de positionnement présente une forme circulaire et le moyen de fixation présente une forme de section circulaire correspondante, et le diamètre interne de l'ouverture de positionnement est sensiblement égal au diamètre externe du moyen de fixation.

Selon une caractéristique de l'invention, le premier trou et le deuxième trou sont disposés de part et d'autre de l'orifice de passage.

Selon une caractéristique de l'invention, la plaquette de positionnement comprend une patte configurée pour maintenir des câbles d'alimentation en énergie électrique.

Selon une caractéristique de l'invention, le premier trou présente une forme complémentaire de la forme du premier pion.

Selon une caractéristique de l'invention, le deuxième trou présente une forme oblongue. Cette forme oblongue permet d'éviter de former un système hyperstatique.

D'autres caractéristiques, détails et avantages de l'invention ressortiront plus clairement à la lecture de la description qui suit d'une part, et d'exemples de réalisation donnés à titre indicatif et non limitatif en référence aux dessins schématiques annexés d'autres part, sur lesquels :
[Fig.1] représente schématiquement une vue générale d'une structure formant une partie d'une caisse d'un véhicule automobile participant à délimiter l'habitacle dudit véhicule automobile ;
[Fig.2] représente schématiquement une vue de coupe de la structure, visible sur la figure 1, mettant en évidence la solidarisation d'un rail pour un ouvrant latéral coulissant à un cadre de la structure ;
[Fig.3] représente schématiquement une première étape d'un procédé d'assemblage de la structure au cours de laquelle des pions sont solidarisés au cadre ;
[Fig.4] représente schématiquement une deuxième étape du procédé d'assemblage de la structure au cours de laquelle le rail est disposé contre le cadre de sorte qu'un moyen de fixation du rail s'étende à travers un orifice de passage réalisé dans le cadre ;
[Fig.5] représente schématiquement une vue en détail d'une plaquette de positionnement conforme à un aspect de la présente invention ;
[Fig.6] représente schématiquement une troisième étape du procédé d'assemblage de la structure au cours de laquelle la plaquette de positionnement est positionnée contre une première face du cadre, cette troisième étape étant ici réalisée alors que la deuxième étape illustrée sur la figure 4 a été préalablement réalisée ;
[Fig.7] représente schématiquement une quatrième étape du procédé d'assemblage de la structure au cours de laquelle le rail et la plaquette de positionnement sont solidarisés au cadre.

Les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique.

Sur les figures, les éléments communs à plusieurs figures conservent la même référence.

Dans la description détaillée qui va suivre, les dénominations « longitudinale », « transversale » et « verticale » se réfèrent à l'orientation d'un véhicule automobile. Une direction longitudinale correspond à une direction d'avancement d'un véhicule comprenant la structure assemblée selon un aspect de l'invention, cette direction longitudinale étant parallèle à un axe longitudinal L d'un repère L, V, T illustré sur les figures. Une direction transversale correspond à une direction perpendiculaire, dans un plan parallèle à la route sur laquelle le véhicule circule, à la direction d'avancement du véhicule comprenant ladite structure, cette direction transversale étant parallèle à un axe transversal T du repère L, V, T et cet axe transversal T étant perpendiculaire à l'axe longitudinal L. Enfin, une direction verticale correspond à une direction parallèle à un axe vertical V du repère L, V, T, cet axe vertical V étant perpendiculaire à l'axe longitudinal L et à l'axe transversal T.

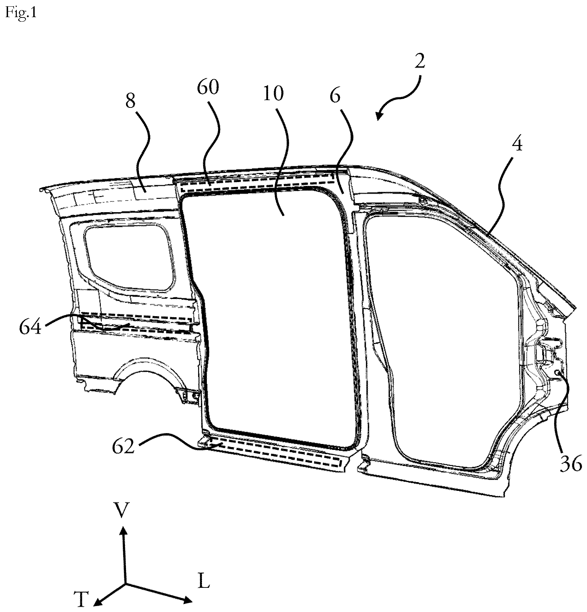

La figure 1 illustre une vue générale d'une structure 2 d'un véhicule automobile. Plus spécifiquement, la figure 1 représente une partie d'une caisse dudit véhicule formant un côté de caisse du véhicule automobile. La caisse est un élément du véhicule automobile participant à délimiter, avec le plancher roulant sur lequel elle est assemblée, un habitacle du véhicule automobile. Cette structure 2 est formée, dans le mode de réalisation représenté, d'une pluralité de tôles solidarisées les unes avec les autres pour former un ensemble rigide, par ailleurs destiné à supporter des équipements du véhicule automobile.

Dans le mode de réalisation représenté, cette structure 2 comprend notamment, une aile avant 4, un cadre 6 et une partie arrière 8. Le cadre 6 s'étend verticalement, c'est-à-dire parallèlement à l'axe V, du plancher du véhicule automobile jusqu'au toit dudit véhicule automobile, ici non représentés, et ce cadre 6 s'étend longitudinalement entre l'aile avant 4 et la partie arrière 8. On comprend que dans le mode de réalisation représenté, la cadre 6 forme un élément de la structure 2 s'étendant sur l'ensemble de la dimension verticale de ladite structure 2. L'aile avant 4, le cadre 6 et la partie arrière 8 sont solidarisés les uns avec les autres et alignés le long d'une direction d'alignement parallèle à l'axe L.

Ce cadre 6 peut être formé d'une unique pièce pour former un ensemble monobloc. Alternativement, le cadre 6 peut être formé d'un ensemble de pièces solidarisées les unes aux autres.

Le cadre 6 délimite une embrasure 10 du véhicule automobile, qui forme un espace par lequel un utilisateur est apte à entrer et à sortir entièrement de l'habitacle du véhicule automobile, et/ou à charger et décharger des objets dans une zone de stockage à l'arrière de l'habitacle du véhicule. Cette embrasure est destinée à être recouverte, lorsque le véhicule est fermé, par un ouvrant coulissant, ici un ouvrant latéral coulissant, non visible sur les figures, monté coulissant sur des rails parmi lesquels au moins un rail est solidarisé au cadre 6.

Dans l'exemple illustré, la structure du véhicule comporte un rail porteur agencé sur le cadre 6 dans une zone de réception supérieure 60, au-dessus de l'embrasure 10, et elle comporte un rail additionnel agencé sur le cadre 6 dans une zone de réception inférieure 62, sous l'embrasure 10, ces deux zones de réception étant représentées en traits pointillés sur la figure 1. Par ailleurs, afin d'assurer un guidage précis de l'ouvrant latéral coulissant, le véhicule peut comporter un rail de guidage central, rendu solidaire de la partie arrière, dans une zone de guidage 64.

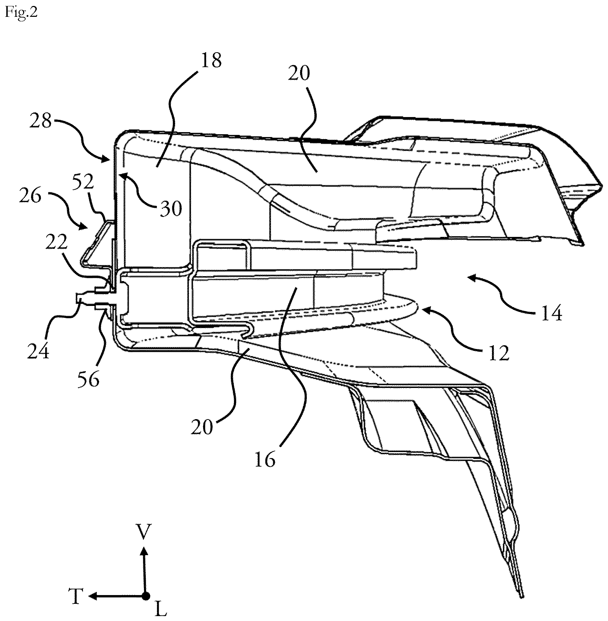

Le rail porteur 12, visible sur la figure 2, est solidarisé directement ou indirectement au cadre 6. En lien avec les figures 2 à 6, nous allons maintenant décrire un procédé d'assemblage du rail spécifique de l'invention. Il convient de noter que dans l'exemple illustré, ce procédé d'assemblage est associé à l'assemblage d'un rail porteur 12 dans la zone supérieure de réception 60 du cadre, dans la mesure où le besoin d'un positionnement précis du rail est particulièrement important pour un rail porteur, mais ce procédé pourrait être appliqué à l'assemblage d'autres rails associés à un ouvrant coulissant.

La figure 2 est une vue de coupe d'une partie du cadre 6 comportant ladite zone supérieure de réception 60. Plus particulièrement ici, cette partie du cadre 6 est formée par un boîtier de rail qui est destinée par ailleurs à être rapportée, notamment par soudage sur d'autres morceaux de tôles pour former ensemble le cadre 6. Cette vue en coupe permet d'illustrer le positionnement du rail 12 par rapport au cadre 6.

Le rail 12 comprend une gouttière 16 dans laquelle au moins un galet solidaire de l'ouvrant latéral coulissant est destiné à circuler. Plus particulièrement, ledit rail 12 est un rail porteur destiné d'une part à permettre le passage de l'ouvrant latéral coulissant entre une position ouverte et une position fermée et d'autre part à supporter le poids de l'ouvrant latéral coulissant.

À cet effet, un premier galet de l'ouvrant latéral coulissant circule dans la gouttière 16 de sorte à guider l'ouvrant latéral coulissant le long d'un premier sens permettant de faire passer l'ouvrant latéral coulissant de sa position fermée à sa position ouverte et le long d'un deuxième sens permettant de faire passer l'ouvrant latéral coulissant de la position ouverte à la position fermée. De plus, un deuxième galet de l'ouvrant latéral coulissant vient en appui contre le rail 12 de sorte que le rail 12 assure le support du poids de l'ouvrant latéral coulissant par l'intermédiaire du deuxième galet.

Pour loger le rail 12, le cadre 6, et plus particulièrement ici le boîtier de rail participant à former le cadre, est configuré pour former un logement 14 ouvert vers l'extérieur, c'est-à-dire vers l'extérieur du véhicule automobile lorsque ce dernier est assemblé. Plus spécifiquement, le logement 14 est délimité par une paroi du cadre formant une paroi de fond 18 et par deux parois formant deux parois transverses 20 s'étendant depuis la paroi de fond 18 vers l'extérieur du véhicule automobile. Il est remarquable sur la figure 2 que la paroi de fond 18 présente un galbe et que le rail épouse cette forme de la paroi de fond 18, mais la paroi de fond pourrait sans sortir du contexte de l'invention être plan. Le logement 14 s'étend, dans le mode de réalisation représenté, tout le long de la dimension longitudinale du cadre 6.

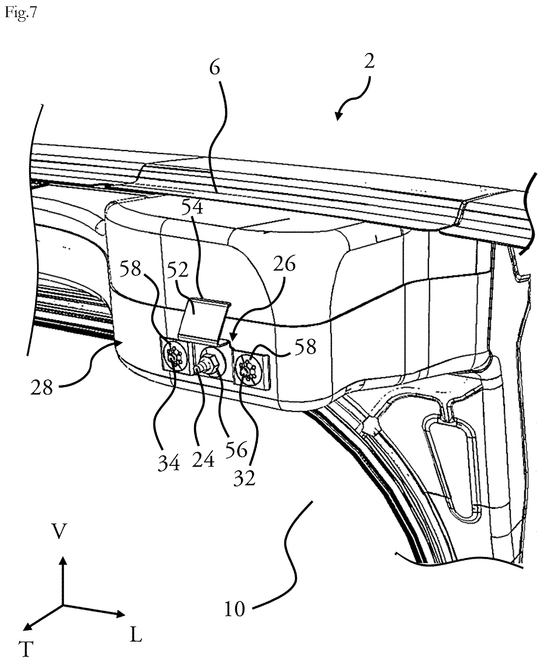

En outre, le cadre 6 comprend un orifice de passage 22. Cet orifice de passage 22 est réalisé dans la paroi de fond 18 du cadre 6 et est destiné à être traversé par un moyen de fixation 24 du rail 12 pour permettre la solidarisation du rail 12 à la structure 2, et plus spécifiquement au cadre 6. Tel qu'illustré sur la figure 2, le rail 12 est ainsi solidarisé par la mise en place d'un élément de solidarisation 56, qui sera décrit plus en détails ci-après en référence à la figure 7, qui vient figer la position du moyen de fixation 24, et donc du rail 12, par rapport à la paroi de fond 18.

De plus, la structure 2 comprend également une plaquette de positionnement 26 configurée pour coopérer avec le moyen de fixation, ici de l'autre côté de la paroi de fond 18. Plus particulièrement, la plaquette de positionnement est plaquée contre une première face 28 du cadre 6, à savoir ici une première face de la paroi de fond 18 du logement 14 recevant le rail 12. Cette première face 28 est tournée vers l'intérieur du véhicule, à l'opposé de l'ouverture du logement 14 par laquelle est insérée le rail porteur 12.

Le rail porteur 12 est positionnée contre une deuxième face 30 du cadre 6, à savoir ici une deuxième face de la paroi de fond 18 du logement 14 recevant le rail 12. La deuxième face 30 est opposée à la première face 28. Il est notable que le rail porteur 12 et la plaquette de positionnement 26 sont disposées contre des faces en opposition d'une même paroi du cadre, ici la paroi de fond 18. Dans le présent document, il pourra être indifféremment fait mention d'une première ou deuxième face du cadre ou d'une première ou deuxième face d'une paroi du cadre.

La plaquette de positionnement 26 permet, tel qu'il sera décrit plus en détail dans la description qui suivra, de positionner avec précision le rail 12 par rapport au cadre 6, et plus largement par rapport aux autres éléments formant la structure 2, notamment des pions spécifiquement rendus solidaires du cadre et de la première face 28 de ce cadre 6.

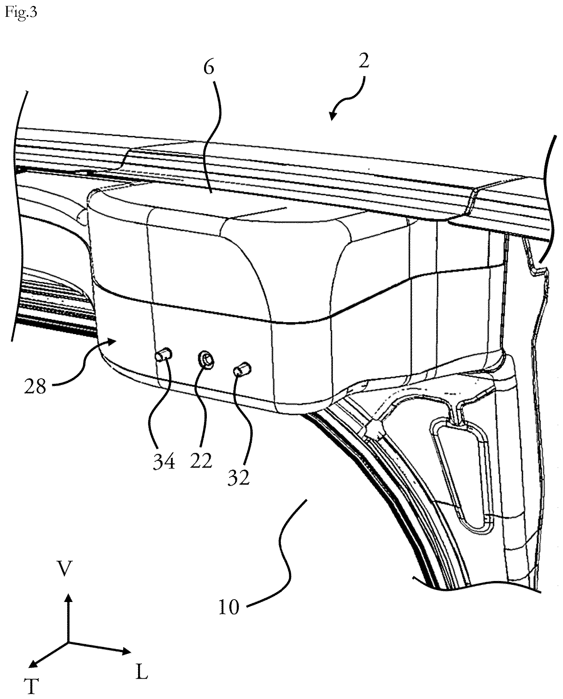

La figure 3 illustre une première étape d'un procédé d'assemblage de la structure 2 d'un véhicule automobile, et plus spécifiquement d'un procédé d'assemblage du rail 12 au cadre 6.

Au cours de cette première étape du procédé d'assemblage, un premier pion 32 et un deuxième pion 34 sont solidarisés à la première face 28 du cadre 6. Plus spécifiquement, le premier pion 32 et le deuxième pion 34 sont solidarisés à la première face 28 du cadre 6 en étant disposés au voisinage de l'orifice de passage 22, ici de part et d'autre de cet orifice de passage 22. Plus particulièrement, dans le mode de réalisation représenté, le premier pion 32, le deuxième pion 34 et l'orifice de passage 22 sont alignés les uns avec les autres de sorte qu'une même droite coupe l'axe d'allongement du premier pion 32, l'axe d'allongement du deuxième pion 34 et le centre de l'orifice de passage 22. Par ailleurs, ici, les pions sont à équidistance de l'orifice de passage. Il est notable que ce positionnement spécifique des pions n'est pas limitatif de l'invention, dès lors que, tel que cela va être décrit ci-après, les pions servent de point de référence, au voisinage de l'orifice de passage, pour positionner la plaquette de positionnement 26 afin que l'ouverture de positionnement de cette dernière vienne se superposer à l'orifice de passage pour permettre l'ajustement en position du moyen de fixation traversant l'orifice de passage.

Les pions 32, 34 sont spécifiquement réalisés dans le procédé d'assemblage de l'invention pour servir de référentiel au montage de la plaquette de positionnement sur le cadre. Ces pions n'ont pas d'autres fonctions. Le positionnement du premier pion 32 et du deuxième pion 34 sur la première face 28 est réalisé au cours d'une étape antérieure à la première étape. Au cours de cette étape antérieure à la première étape, le premier pion 32 et le deuxième pion 34 sont positionnés sur la première face 28 du cadre 6 par rapport à un point de référence 36 d'un élément structurel de base, visible sur la figure 1.

L'élément structurel de base est ici l'aile avant 4 du côté de caisse et le point de référence 36 est un trou réalisé dans le montant de pied de cette aile avant 4. Le point de référence sert ici de point d'origine d'une mesure laser pour que le premier pion 32 et le deuxième pion 34 soient positionnés avec précision par rapport à un élément de structure sur lequel le cadre 6 est rapporté. Tel qu'évoqué, ce cadre 6 peut être formé de plusieurs éléments de tôle et notamment d'un boîtier de rail dans lequel est logé le rail porteur 12. De la sorte, l'embrasure 10 formée par le cadre est positionné par rapport à l'aile avant 4, et les pions 32, 34 permettant de figer la position du rail 12 par l'intermédiaire de la plaquette de positionnement sont également positionné par rapport à l'aile avant. On améliore ainsi l'ajustement de position du rail par rapport à l'embrasure en évitant l'addition des tolérances de fabrication et de montage des pièces de structure intermédiaires, par exemple le boîtier de rail. Bien entendu, le choix de l'élément structurel de base peut être différent dès lors que ce choix permet de positionner avec précision le premier pion 32 et le deuxième pion 34.

Le positionnement ainsi que la solidarisation du premier pion 32 et du deuxième pion 34 sont réalisés par un automate apte à collecter des données relatives à la spatialisation de la structure 2 et à ajuster la position du premier pion 32 et du deuxième pion 34 en fonction desdites données. L'automate est un équipement volumineux rendant impossible le positionnement et la solidarisation du premier pion 32 et du deuxième pion 34 sur la deuxième face 30 du cadre 6. En effet, les parois transverses 20 qui délimitent une faible section de passage ne permettent pas à l'automate d'atteindre la deuxième face 30 du cadre 6. C'est dans ce contexte que les pions sont disposés sur la première face 28 du cadre, à l'opposé de la face sur laquelle est disposé le rail, et que la plaquette de positionnement 26 est rendue nécessaire pour faire l'intermédiaire entre les pions formant des référentiels et le rail à fixer.

Tel qu'évoqué précédemment, le premier pion 32 et le deuxième pion 34 sont positionnés et solidarisés à la première face 28 du cadre 6 de sorte à être répartis au voisinage de l'orifice de passage 22, mais il convient néanmoins de noter que le premier pion 32 et le deuxième pion 34 sont positionnés sur le cadre 6 indépendamment de la position de l'orifice de passage 22. En d'autres termes, la position de l'orifice de passage ne sert pas de référentiel pour positionner les pions 32, 34.

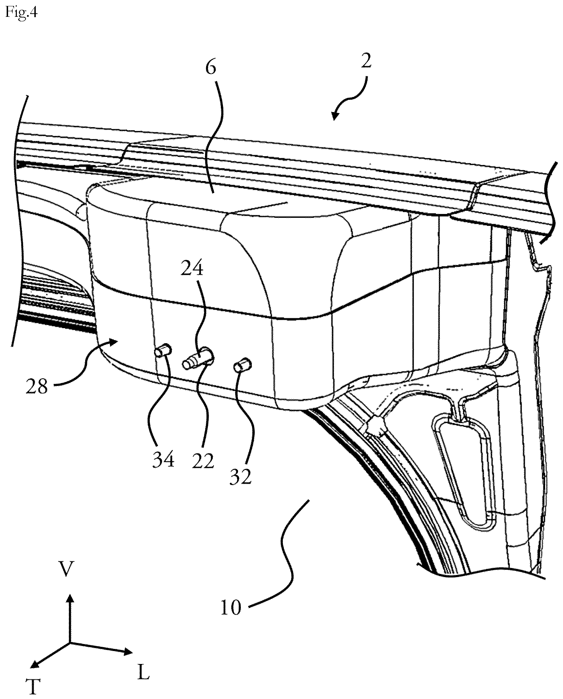

La figure 4 représente une deuxième étape du procédé d'assemblage de la structure 2. Au cours de cette deuxième étape du procédé d'assemblage, le rail 12 est logé dans le logement 14 de sorte que le moyen de fixation 24 s'étende à travers l'orifice de passage 22. Ce positionnement du rail 12 peut être réalisé par un opérateur, qui vient poser le rail 12 sur une paroi transverse 20 qui génère ainsi une zone d'appui pour le support du rail 12. On comprend qu'à l'issue de cette deuxième étape le moyen de fixation 24 fait saillie de la première face 28, tel que cela est visible sur la figure 4. Cette figure rend par ailleurs visible que la dimension de l'orifice de passage 22, ici le diamètre interne de cet orifice est supérieur à la dimension correspondante du moyen de fixation, ici le diamètre externe de la tige filetée formant le moyen de fixation 24. Cette caractéristique facilite le positionnement du rail à l'intérieur du logement 14, puisque la tige filetée s'insère facilement dans l'orifice de passage 22.

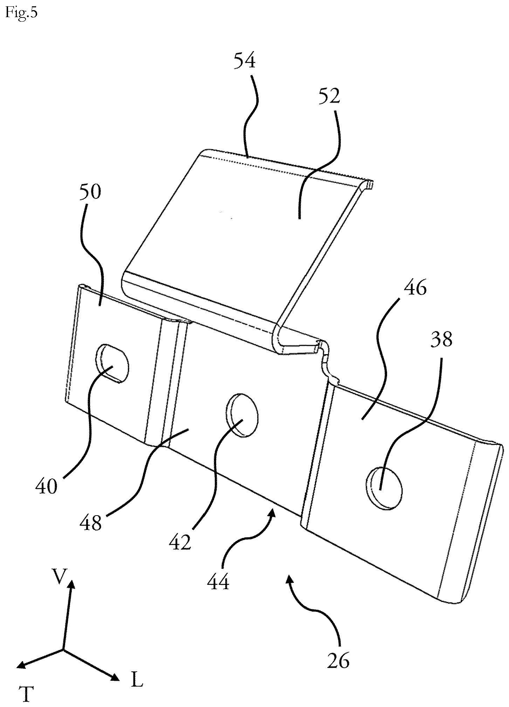

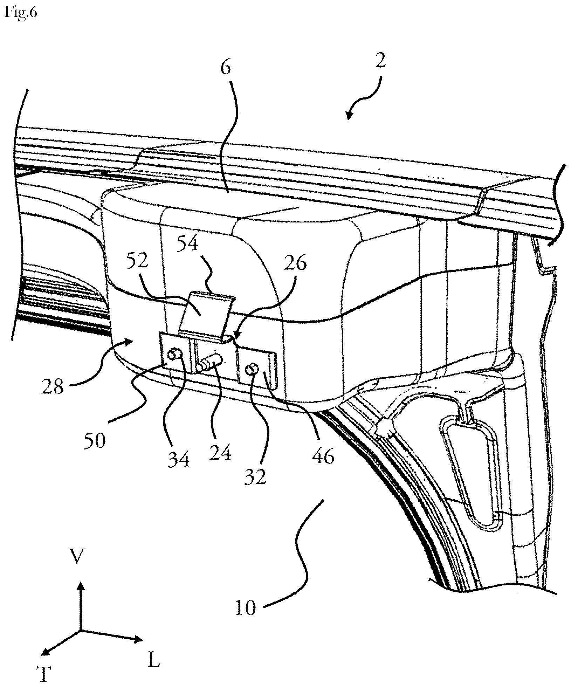

Les figures 5 et 6 représentent respectivement une vue en détail de la plaquette de positionnement 26 et une troisième étape du procédé d'assemblage de la structure 2. La plaquette de positionnement 26 comprend un premier trou 38, un deuxième trou 40 et une ouverture de positionnement 42. Il est particulièrement remarquable sur la figure 5 que dans le mode de réalisation représenté, la plaquette de positionnement 26 comprend un corps principal 44 comprenant une première zone 46 sur laquelle est réalisé le premier trou 38, une deuxième zone 48 sur laquelle est réalisée l'ouverture de positionnement 42 et une troisième zone 50 sur laquelle est réalisé le deuxième trou 40.

À l'instar du premier pion 32, du deuxième pion 34 et de l'orifice de passage 22, le premier trou 38, le deuxième trou 40 et l'ouverture de positionnement 42 sont alignés sur une même droite. En d'autres termes, les lumières formées dans la plaquette de positionnement 26 sont agencées les unes par rapport aux autres de sorte qu'elles puissent coopérer avec les éléments en saillie de la première face 28 du cadre pour que la plaquette de positionnement puisse être plaquée contre cette première face 28.

Au cours de la troisième étape du procédé d'assemblage, la plaquette de positionnement 26 est positionnée contre la première face 28 du cadre 6 de sorte que le premier pion 32 s'étende à travers le premier trou 38 et le deuxième pion 34 s'étende à travers le deuxième trou 40. A cet effet, le premier pion 32 et le deuxième pion 34 sont solidarisés à la première face 28 avec un écartement, c'est-à-dire une distance séparant le premier pion 32 du deuxième pion 34, sensiblement égal à l'écartement entre le premier trou 38 et le deuxième trou 40. Cet écartement est mesuré entre les axes d'allongement propres à chacun des pions, et cette distance est mesurée entre les centres respectifs des deux trous. Ainsi, la plaquette de positionnement 26 est apte à être montée sur le cadre 6 en logeant les pions 32, 34 dans les trous 38, 40 associés de la plaquette de positionnement 26.

Une fois la deuxième étape et la troisième étape réalisée, le moyen de fixation 24 s'étend à travers l'ouverture de positionnement 42. A cet effet, l'ouverture de positionnement 42 présente un diamètre sensiblement égal au diamètre du moyen de fixation 24. Plus précisément, l'ouverture de positionnement 42 présente un diamètre égal au diamètre du moyen de fixation 24 plus au plus 0,5mm, préférentiellement au plus 0,2mm.

La disposition de la plaquette de positionnement 26 contre la première face 28 telle qu'elle vient d'être évoquée permet de corriger, ou d'ajuster selon l'ordre de réalisation des deuxième et troisième étapes, le positionnement du rail 12 par rapport à la structure 2. Plus particulièrement, dans une première alternative, la deuxième étape est réalisée avant la troisième étape, et la plaquette de positionnement 26 est positionnée contre la première face du cadre alors que le rail 12 est déjà positionné contre la deuxième face 30 du cadre 6, avec le moyen de fixation 24 qui fait saillie de la première face 28 du cadre. Dans le contexte de cette première alternative, la plaquette de positionnement permet de corriger le positionnement du rail puisque l'ouverture de positionnement 42 s'ajuste autour du moyen de fixation 24 qui à ce moment s'étend à travers l'orifice de passage avec un certain jeu du fait des dimensions évoquées précédemment. Il est notable que la dimension axiale, en saillie de la première face 28 du cadre, du moyen de fixation 24 est supérieure à celle des pions 32, 34 : le moyen de positionnement vient déjà en prise sur le moyen de fixation puis vient s'engager dans les pions, de sorte que le mouvement du moyen de positionnement vers la première face tend à corriger la position du moyen de fixation au sein de l'orifice de passage. Ici, cette correction de position est telle que le moyen de fixation 24 du rail 12 est aligné avec les pions 32, 34.

Dans une deuxième alternative, la troisième étape est réalisée avant la deuxième étape, de sorte que la plaquette de positionnement 26 est positionnée contre la première face du cadre avant que le rail 12 soit positionné contre la deuxième face 30 du cadre 6. Ainsi, le moyen de fixation 24 doit traverser simultanément l'orifice de passage 22 du cadre et l'ouverture de positionnement 42. Le jeu pour insérer le moyen de fixation 24 est réduit à son strict minimum de sorte que la position du rail est ajustée directement.

De manière générale, on comprend qu'en plaçant la plaquette de positionnement 26 contre la première face 28 par rapport au premier pion 32 et au deuxième pion 34, la position du moyen de fixation 24, et par extension la position du rail 12, est corrigée pour prendre une position fiable par rapport aux pions 32, 34, et donc par rapport au point de référence de la structure de base du véhicule, ici l'aile avant 4. Ainsi la position de l'ouvrant latéral coulissant défini par la position du rail 12 par rapport au cadre 6 est corrigée lors de la pose du rail 12 sans nécessiter une étape supplémentaire de retouche.

La figure 5 rend par ailleurs notable que les deux trous 38, 40 peuvent présenter une forme différente. Le premier trou 38 présente ici une forme complémentaire du premier pion 32, c'est-à-dire avec un diamètre interne légèrement supérieur au diamètre du premier pion 32, d'au plus 0,5mm, préférentiellement au plus 0,2mm. Le deuxième trou 40 présente quant à lui une forme oblongue. Il convient de noter que la forme oblongue du deuxième trou 40 permet de limiter la formation d'un système hyperstatique et permet de corriger une faible dispersion générée par l'automate lors de la solidarisation du premier pion 32 et du deuxième pion 34 à la première face 28 du cadre 6. Cette forme oblongue du deuxième trou 40 permet toutefois, lorsque le moyen de fixation 24 ne s'étend pas encore à travers l'ouverture de positionnement 42, d'empêcher la rotation de la plaquette de positionnement 26.

Dans le mode de réalisation représenté par la figure 5, la plaquette de positionnement comprend une patte 52 s'étendant depuis la deuxième zone 48 du corps principal 44 jusqu'à une portion terminale 54. Lors de la solidarisation de la plaquette de positionnement 26 au cadre 6, qui sera décrit plus en détail en lien avec la figure 7, seule la portion terminale 54 vient en appui contre la première face 28 du cadre 6 de sorte qu'un espace est formé entre la patte 52 et le cadre 6. Cet espace peut avantageusement être utilisé pour permettre de maintenir contre le cadre 6, à titre d'exemple illustratif et non limitatif, des câbles d'alimentation en énergie électrique. A titre d'exemple, le câble peut être fixé sur la patte 52 par l'intermédiaire d'une agrafe de fixation.

La figure 7 illustre une quatrième étape du procédé d'assemblage de la structure 2. Au cours de cette quatrième étape le moyen de fixation 24, qui s'étend à travers l'ouverture de positionnement 42 suite à la réalisation des deuxième et troisième étapes, est solidarisé à la plaque de positionnement 26. Cette solidarisation est opérée, dans le mode de réalisation représenté, par un élément de solidarisation 56 formé ici par un écrou. On comprend que le moyen de fixation 24 présente un filetage dont les caractéristiques sont complémentaires de celles d'un taraudage réalisé dans l'élément de solidarisation 56.

Le serrage de l'élément de solidarisation 56 autour du moyen de fixation et contre la première face 28 du cadre 6 conduit d'une part à plaquer la plaquette de positionnement 26 contre la première face 28 du cadre 6 et d'autre part à plaquer une partie du rail 12 contre la deuxième face 30 du cadre 6.

Plus spécifiquement, cette solidarisation conduit à ce que la deuxième zone 48 du corps principal 44 de la plaquette de positionnement 26 est en appui contre la première face 28. La première zone 46 et la troisième zone 50 sont quant à elles à une faible distance de la première face 28. En effet, lors de la solidarisation du premier pion 32 et du deuxième pion 34 à la première face 28, un dépôt de matière est réalisé à la jonction desdits pions 32, 34 avec le cadre 6. Aussi, la deuxième zone 48 s'inscrit dans un plan qui est décalé par rapport à un plan dans lequel s'inscrit la première zone 46 et la troisième zone 50. Ce décalage permet de contraindre la plaquette de positionnement 26 contre la première face 28 sans que le surplus de matière à la base des pions 32, 34 n'empêche ce plaquage.

Il est également remarquable sur la figure 7 que des moyens de maintien 58 sont disposés en prise sur les pions 32, 34. Ces moyens de maintien 58 permettent de maintenir la plaquette de positionnement 26 solidaire desdits pions 32, 34.

Ces moyens de maintien 58 ont juste pour effet d'empêcher la plaquette de positionnement de se désengager des pions au cours du procédé d'assemblage, avant que la quatrième étape soit finalisée. Ils ne sont pas nécessaires si l'opérateur ou les outils d'assemblage permettent d'assurer que la plaquette soit bien en position lors de la quatrième étape. Ces moyens de maintien 58 ont pour avantage de ne pas imposer de chronologie entre la deuxième étape du procédé d'assemblage et la troisième étape du procédé d'assemblage. Dans l'alternative où la troisième étape du procédé d'assemblage est réalisée avant la deuxième étape du procédé d'assemblage, le rail est positionné contre la deuxième face 30 du cadre alors que la plaquette de positionnement 26 est déjà en position contre la première face 28 du cadre 6. Etant donné que l'ouverture de positionnement 42 présente des dimensions équivalentes à celles du moyen de fixation 24, inférieures à celles de l'orifice de passage 22, il convient d'éviter que la plaquette de positionnement puisse se dégager des pions 32, 34 si le moyen de fixation 24 solidaire du rail 12 vient taper contre la deuxième zone 48 de la plaquette de positionnement après être passé au travers de l'orifice de passage 22. Dans ce contexte, dès que la plaquette de positionnement est positionnée contre la première face 28 du cadre 6, les moyens de maintien 58 sont alors disposés sur le premier pion 32 et sur le deuxième pion 34 de sorte à maintenir la plaquette de positionnement 26 contre la première face 28 du cadre 6. La deuxième étape du procédé d'assemblage peut alors être réalisée sans risquer de déloger le premier pion 32 et le deuxième pion 34 de leur trou 38, 40 respectif de la plaquette de positionnement 26.

La présente invention atteint bien le but qu'elle s'était fixé en proposant un procédé d'assemblage d'une structure d'un véhicule permettant de positionner le rail par rapport à un élément de base de la structure. Ce procédé d'assemblage permet ainsi d'éviter de mettre en œuvre une étape additionnelle de retouche de la position du rail au moyen d'une plaquette de positionnement venant corriger la position du rail lors de la pose de ce dernier.

La présente invention ne saurait toutefois se limiter aux moyens et configurations décrits et illustrés ici et elle s'étend également à tout moyen et toute configuration équivalents ainsi qu'à toute combinaison techniquement opérante de tels moyens.

## Revendications

1. Procédé d'assemblage d'une structure (2) d'un véhicule automobile comprenant au moins un cadre (6) configuré pour délimiter une embrasure (10) d'un ouvrant coulissant du véhicule automobile et au moins un rail (12) solidarisé au cadre (6) et configuré pour assurer au moins le guidage de l'ouvrant coulissant, le procédé d'assemblage mettant en œuvre au moins :
- une première étape au cours de laquelle un premier pion (32) et un deuxième pion (34) sont solidarisés à une première face (28) du cadre (6),
- une deuxième étape au cours de laquelle le rail (12), comprenant un moyen de fixation (24), est positionné, directement ou indirectement, contre une deuxième face (30) du cadre (6), opposée à la première face (28), de sorte que le moyen de fixation (24) s'étende à travers un orifice de passage (22) formé dans le cadre (6),
- une troisième étape au cours de laquelle une plaquette de positionnement (26), comprenant un premier trou (38), un deuxième trou (40) et une ouverture de positionnement (42), est positionnée contre la première face (28) du cadre (6) de sorte que le premier pion (32) s'étende à travers le premier trou (46) et le deuxième pion (34) s'étende à travers le deuxième trou (40), l'ouverture de positionnement (42) étant alignée avec l'orifice de passage (22),
- une quatrième étape au cours de laquelle le moyen de fixation (24), qui s'étend à travers l'ouverture de positionnement (42) suite à la réalisation des deuxième et troisième étapes, est solidarisé à la plaquette de positionnement (26).

2. Procédé d'assemblage selon la revendication 1, dans lequel la position du moyen de fixation (24) par rapport à l'orifice de passage (22) est ajustée au moyen de l'ouverture de positionnement (42) de la plaquette de positionnement (26).

3. Procédé d'assemblage selon l'une quelconque des revendications 1 et 2, dans lequel au cours d'une étape antérieure à la première étape, le premier pion (32) et le deuxième pion (34) sont positionnés sur la première face (28) du cadre (6) par rapport à un point de référence d'un élément structurel de base (36) de la structure (2) du véhicule automobile.

4. Procédé d'assemblage selon la revendication 3, dans lequel le premier pion (32) et le deuxième pion (34) sont positionnés sur la première face (28) du cadre (6) indépendamment de la position de l'orifice de passage (22) par rapport à l'élément structurel de base (36).

5. Plaquette de positionnement (26) pour la mise en œuvre du procédé d'assemblage selon l'une quelconque des revendication 1 à 4.

6. Plaquette de positionnement (26) selon la revendication 5, dans laquelle l'ouverture de positionnement (42) présente un diamètre complémentaire du diamètre du moyen de fixation (24).

7. Plaquette de positionnement (26) selon l'une quelconque des revendications 5 et 6, dans laquelle le premier trou (38) et le deuxième trou (40) sont disposés de part et d'autre de l'ouverture de positionnement (42).

8. Plaquette de positionnement (26) selon l'une quelconque des revendications 5 à 7, comprenant une patte (52) configurée pour maintenir des câbles d'alimentation en énergie électrique.

9. Plaquette de positionnement (26) selon l'une quelconque des revendications 5 à 8, dans laquelle le premier trou (38) présente une forme complémentaire de la forme du premier pion (32).

10. Plaquette de positionnement selon l'une quelconque des revendications 5 à 9, dans lequel le deuxième trou (40) présente une forme oblongue.
